# EUROPEAN PATENT SPECIFICATION

(11) **EP 3 581 426 B1**
(45) Date of publication and mention of the grant of the patent: **08.09.2021**
(21) Application number: 19171311.4
(22) Date of filing: 26.04.2019
(51) Int. Cl.: B60L 3/00, B60L 15/10, B60L 15/30, B60L 15/34, B60L 15/36

(54) **ELECTRIC VEHICLE**
ELEKTROFAHRZEUG
VÉHICULE ÉLECTRIQUE

(30) Priority: 15.06.2018 JP 2018114493
(43) Date of publication of application: 18.12.2019
(73) Proprietor: Panasonic Intellectual Property Management Co., Ltd., Osaka-shi, Osaka 540-6207 (JP)
(72) Inventor: IMAOKA, Noriaki, Osaka, 540-6207 (JP); UEMATSU, Hiroyuki, Osaka, 540-6207 (JP)
(74) Representative: Vigand, Philippe

(56) References cited:
- EP-A2- 2 444 274
- CN-A- 107 080 627
- CN-B- 105 105 935
- CN-U- 204 995 679

## Description

### TECHNICAL FIELD

The technical field relates to an autonomous electric vehicle.

### BACKGROUND

An electric vehicle runs and stops with an operation of a person and has a function of stopping running in a case where an obstacle is detected by an obstacle detection sensor. In a case where such an electric vehicle approaches the obstacle, the electric vehicle stops at a position away from the obstacle to a certain extent from a viewpoint of safety. Therefore, for example, in a case where the electric vehicle stops at a predetermined place in a narrow space, the electric vehicle approaches a wall or the like, and automatically stops. As a result, there are cases where the electric vehicle cannot stop at an appropriate place. A running control method of an electric vehicle for appropriately controlling the electric vehicle is described in Japanese Patent Unexamined Publication No. 2011-177205.

In the running control method of the electric vehicle, information indicating whether or not an obstacle is detected from an obstacle detection sensor is input into a running permission determination unit. In a case where the obstacle is detected by the obstacle detection sensor, the running permission determination unit instructs a warning issuing unit to issue the detection, and instructs a motor driving unit to stop an operation of a motor. Therefore, the electric vehicle temporarily stops the operation and can avoid collision with the obstacle. Thereafter, the running permission determination unit waits for a next running instruction and in a case where a running instruction in a predetermined direction including a direction in which the obstacle exists is received from an instructor, a running permission instruction is sent to the motor driving unit and running of the electric vehicle is permitted while the warning issuing instruction is sent again to the warning issuing unit.

In addition, a configuration of the electric vehicle for realizing the operation is also described in Japanese Patent Unexamined Publication No. 2011-177205. In the electric vehicle described in Japanese Patent Unexamined Publication No. 2011-177205, an obstacle detection sensor is disposed at a foremost portion of a seating portion in an electric vehicle body.

In a case where an obstacle is detected ahead of the electric vehicle, the electric vehicle temporarily stops to avoid collision with the obstacle with the configuration described above. In addition, in a case where the running instruction in a predetermined direction including a direction in which the obstacle is detected is performed again, the running permission determination unit permits the running of the electric vehicle while performing attracting attention to an occupant. Therefore, the occupant can cause the electric vehicle to run in the vicinity of the obstacle, approach or leave the obstacle, or cause the electric vehicle to run for passing other electric vehicles. In addition, the occupant can not only easily perform an operation of housing the vehicle body of the electric vehicle at a wall edge of a room but also can cause the electric vehicle to run in the vicinity of the obstacle without performing any special operation such as releasing of the obstacle detection sensor. The document EP3581426 discloses an electric vehicle and the document CN105105935 discloses a double-handle control electric wheelchair.

### SUMMARY

However, in the running control method of the electric vehicle disclosed in Japanese Patent Unexamined Publication No. 2011-177205, although the occupant can easily perform the operation of causing the electric vehicle to run in the vicinity of the obstacle, there is also a possibility that the electric vehicle comes into contact with the wall or the like due to a mistake by the occupant. Especially, in an electric vehicle such as a lending electric vehicle that is steered by a passenger who is not accustomed to a steering operation, a risk of the electric vehicle coming into contact with the wall or the like increases. The electric vehicle of the related art has such safety issues.

The present disclosure is intended to solve such a problem of the related art and it is an object of the present disclosure to provide an electric vehicle which not only enables a precise operation such as parking in a narrow space but also can avoid a contact with a wall or an object even in a case where an operator makes a mistake during an operation requiring precision.

In order to achieve the object, there is provided an electric vehicle including: a first instructor that is operated by a first operator and performs an instruction of acceleration, deceleration, or stop; a second instructor that is operated by a second operator and performs an instruction of acceleration, deceleration, or stop; a third instructor that determines a possibility of collision and performs the instruction of deceleration or stop; a controller that selects one of the instructions from the first instructor, the second instructor, and the third instructor; and a driver that drives according to an instruction from the controller, in which in a case of receiving the instructions from at least the first instructor and the third instructor, the controller preferentially selects the instruction from the third instructor to the instruction from the first instructor.

According to the electric vehicle of the present disclosure, not only a precise operation such as parking in a narrow space can be performed but also a contact with a wall or an object can be avoided, and safe movement can be continued even in a case where an operator makes a mistake during an operation requiring precision.

### BRIEF DESCRIPTION OF THE DRAWINGS

FIG. 1 is a block diagram illustrating an example of a function of each unit of an electric vehicle;
FIG. 2 is a side view illustrating an example of an arrangement of each unit of the electric vehicle;
FIG. 3 is a flowchart illustrating an example of a flow of a determining process;
FIG. 4 is a flowchart for explaining a setting process of control selection variable M1;
FIG. 5 is a flowchart for explaining a setting process of control selection variable M2;
FIG. 6 is a flowchart for explaining a setting process of control selection variable M3;
FIG. 7 is a flowchart illustrating a setting process of operation value J1;
FIG. 8 is a flowchart illustrating a setting process of operation value J2;
FIG. 9 is a flowchart illustrating a setting process of operation value J3;
FIG. 10 is a flowchart illustrating a flow of a first operation value setting process;
FIG. 11 is a flowchart illustrating a flow of a second operation value setting process; and
FIG. 12 is a flowchart illustrating a flow of a third operation value setting process.

### DESCRIPTION OF EMBODIMENTS

Hereinafter, exemplary embodiments of the present disclosure will be described with reference to the drawings. The same reference numerals are given to the same configuration elements. The drawings schematically illustrate respective configuration elements for easy understanding.

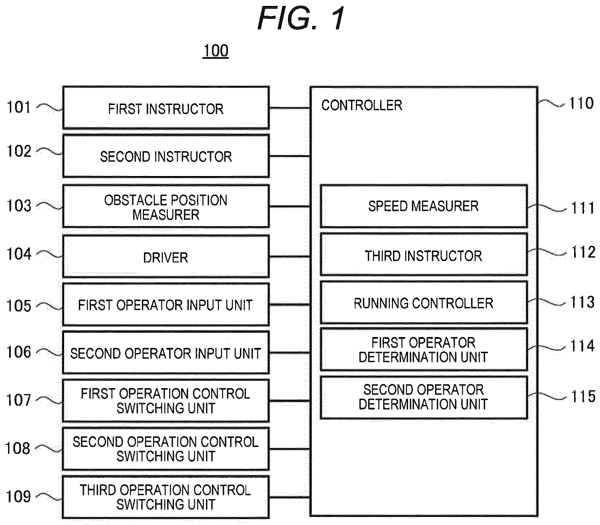

FIG. 1 is a block diagram illustrating an example of a function of each unit of electric vehicle 100. In the exemplary embodiment, electric vehicle 100 is an electric wheelchair. Electric vehicle 100 includes first instructor 101, second instructor 102, obstacle position measurer 103, driver 104, first operator input unit 105, second operator input unit 106, first operation control switching unit 107, second operation control switching unit 108, third operation control switching unit 109, and controller 110.

First instructor 101 is a device that receives an operation from an occupant instructing a direction and a speed at which electric vehicle 100 runs. First instructor 101 performs an instruction of acceleration, deceleration, or stop with respect to controller 110. First instructor 101 includes a running direction instructor for instructing the running direction of electric vehicle 100 and a moving speed instructor for instructing a moving speed of electric vehicle 100. First instructor 101 is constituted of, for example, a joystick.

Second instructor 102 is a device that receives an operation for instructing the direction and the speed at which electric vehicle 100 runs from an attendant accompanying the occupant. Second instructor 102 performs an instruction of acceleration, deceleration, or stop with respect to controller 110. Second instructor 102 includes a running direction instructor for instructing the running direction of electric vehicle 100 and a moving speed instructor for instructing the moving speed of electric vehicle 100. Second instructor 102 is constituted of, for example, a joystick.

Obstacle position measurer 103 is a measuring sensor for measuring a distance between an object existing in a periphery and electric vehicle 100, and a direction in which the object exists. Obstacle position measurer 103 radiates laser to measure the object existing in the periphery of electric vehicle 100 to measure a distance to the periphery, so that a direction to the obstacle existing in the periphery and a distance to the obstacle are detected. Specifically, obstacle position measurer 103 scans a semicircular field with an infrared laser beam at substantially 270 degrees with a fine pitch such as 0.36 degrees, and measures the distance to the object existing in the periphery based on a time until a reflected light of the infrared laser beam is detected.

Driver 104 is constituted of wheels, gears, a motor, a motor driver, a battery, and the like necessary for electric vehicle 100 to run.

First operator input unit 105 is an input device into which information of a person who operates first instructor 101 is input. First operator input unit 105 is constituted of, for example, a camera for imaging a face image of a person, a fingerprint sensor, a bar code reading device, and an IC card reader. Information input into first operator input unit 105 is transmitted to controller 110.

Second operator input unit 106 is an input device into which information of a person who operates second instructor 102 is input. Second operator input unit 106 is constituted of, for example, a camera for imaging a face image of a person, a fingerprint sensor, a bar code reading device, and an IC card reader. Information input into second operator input unit 106 is transmitted to controller 110.

Here, controller 110 will be described. Controller 110 determines the running direction and the speed of electric vehicle 100, and controls driver 104 to perform running control of electric vehicle 100.

Controller 110 includes speed measurer 111, third instructor 112, running controller 113, first operator determination unit 114, and second operator determination unit 115.

Speed measurer 111 measures the current moving direction and the speed of electric vehicle 100. Speed measurer 111 measures, for example, the moving direction and the speed of electric vehicle 100 based on information of an orientation of the wheels and a rotation angle of the wheels detected by an encoder.

Third instructor 112 determines a control value for controlling deceleration or stop of electric vehicle 100 based on a measurement result of obstacle position measurer 103 and a measurement result of speed measurer 111 so as not to collide with the object of the periphery. The control value is a value for controlling the speed and the moving direction of electric vehicle 100. Third instructor 112 sends the control value to running controller 113. That is, third instructor 112 determines a possibility of collision with the obstacle and instructs running controller 113 to control a behavior of electric vehicle 100.

Running controller 113 controls the running of electric vehicle 100 based on the instructions from first instructor 101, second instructor 102, and third instructor 112. Running controller 113 controls, for example, an electric motor included in driver 104, and controls the running of electric vehicle 100.

Running controller 113 determines whether the running control of electric vehicle 100 is performed based on any instruction among the instructions received from first instructor 101, second instructor 102, and third instructor 112. Running controller 113 determines whether electric vehicle 100 is controlled based on any instruction input from each instructor according to a setting state of first operation control switching unit 107, second operation control switching unit 108, and third operation control switching unit 109. This will be described later in detail.

First operator determination unit 114 determines whether or not a person who operates first instructor 101 is a specific person by collating the information input from first operator input unit 105 with predetermined information. First operator determination unit 114 determines, for example, whether or not the person who operated first instructor 101 is a person who is accustomed to the operation of electric vehicle 100. How the determination result of first operator determination unit 114 is used will be described later.

Second operator determination unit 115 determines whether or not a person who operates second instructor 102 is a specific person by collating the information input from second operator input unit 106 with predetermined information. Second operator determination unit 115 determines, for example, whether or not the person who operates second instructor 102 is a person who is accustomed to the operation of electric vehicle 100.

In a case where second operator determination unit 115 determines that the person who operates second instructor 102 is not the specific person, controller 110 invalidates the instruction from second instructor 102.

Only in a case where second operator determination unit 115 determines that the person who operates second instructor 102 is the specific person, controller 110 validates the instruction from second instructor 102.

In this way, in a case where a child or the like around electric vehicle 100 erroneously operates second instructor 102, it is possible to prevent electric vehicle 100 from running. Therefore, it is possible to avoid collision of electric vehicle 100 with the obstacle.

First operator input unit 105 may be a device that transmits a predetermined signal to first operator determination unit 114 in a case of being operated by using a specific key. In this case, first operator determination unit 114 determines that the person who operates first instructor 101 is the specific person in a case of receiving a predetermined signal from first operator input unit 105.

Second operator input unit 106 may be a device that transmits a predetermined signal to second operator determination unit 115 in a case of being operated by a specific key. In this case, second operator determination unit 115 determines that the person who operates second instructor 102 is the specific person in a case of receiving a predetermined signal from second operator input unit 106.

Next, first operation control switching unit 107, second operation control switching unit 108, and third operation control switching unit 109 will be described.

First operation control switching unit 107 is a switching device that switches which instruction running controller 113 preferentially selects in a case where running controller 113 receives instructions from second instructor 102 and third instructor 112. That is, first operation control switching unit 107 is a device that switches a selection order of instructions in running controller 113.

First operation control switching unit 107 is, for example, a device in which setting states (A state and B state) of a lever, a button, and a switch are switched.

In a case where first operation control switching unit 107 is in the A state and running controller 113 receives the instructions from second instructor 102 and third instructor 112, running controller 113 preferentially selects the instruction from third instructor 112. In this case, running controller 113 determines a possibility of collision with the obstacle and controls the behavior of electric vehicle 100, so that the attendant can perform the operation of second instructor 102 with easy mind without concern for collision between electric vehicle 100 and the obstacle.

In a case where first operation control switching unit 107 is in the B state and running controller 113 receives the instructions from second instructor 102 and third instructor 112, running controller 113 preferentially selects the instruction from second instructor 102. That is, running controller 113 controls electric vehicle 100 based on the instruction from second instructor 102, so that the attendant can cause electric vehicle 100 to run by performing a precise operation in second instructor 102.

Second operation control switching unit 108 is a switching device that switches which instruction running controller 113 preferentially selects in a case where running controller 113 receives the instructions from first instructor 101 and second instructor 102. That is, second operation control switching unit 108 is a device that switches a selection order of the instructions in running controller 113.

Second operation control switching unit 108 is, for example, a device in which the setting states (A state and B state) of the lever, the button, and the switch are switched.

In a case where second operation control switching unit 108 is in the A state and running controller 113 receives the instructions from first instructor 101 and second instructor 102, running controller 113 preferentially selects the instruction from second instructor 102. In this case, since the operation on second instructor 102 is preferential to the operation on first instructor 101, the attendant can cause electric vehicle 100 to run in a direction in which the occupant wants to take.

In a case where second operation control switching unit 108 is in the B state and running controller 113 receives the instructions from first instructor 101 and second instructor 102, running controller 113 preferentially selects the instruction from first instructor 101. In this case, since the operation on first instructor 101 is preferential to the operation on second instructor 102, the occupant can cause electric vehicle 100 to run in a direction wanted to be taken.

Third operation control switching unit 109 is a device that switches which instruction running controller 113 preferentially selects in a case where running controller 113 receives the instructions from first instructor 101 and third instructor 112. That is, third operation control switching unit 109 is a device that switches a selection order of the instructions in running controller 113.

Third operation control switching unit 109 is a device in which the setting states (A state and B state) of the lever, the button, and the switch are switched. Third operation control switching unit 109 is set to the B state in an initial state.

In a case where third operation control switching unit 109 is in the B state and running controller 113 receives the instructions from first instructor 101 and third instructor 112, running controller 113 preferentially selects the instruction from third instructor 112. In this case, running controller 113 determines a possibility of collision with the obstacle and controls the behavior of electric vehicle 100, so that the occupant who is not accustomed to the operation of electric vehicle 100 can cause electric vehicle 100 to safely run without causing electric vehicle 100 to erroneously collide with the obstacle.

In a case where third operation control switching unit 109 is switched to the A state, first operator determination unit 114 determines whether or not the person who operates first instructor 101 is the specific person based on information from first operator input unit 105. In first operator determination unit 114, in a case where the person who operates first instructor 101 is determined as the specific person and running controller 113 receives the instructions from first instructor 101 and third instructor 112, running controller 113 preferentially selects the instruction from first instructor 101. Therefore, the person who is accustomed to the operation of electric vehicle 100 can cause electric vehicle 100 to run by performing a precise operation in first instructor 101.

In a case where first operator determination unit 114 determines that the person who operates first instructor 101 is not the specific person, running controller 113 preferentially selects the instruction from third instructor 112.

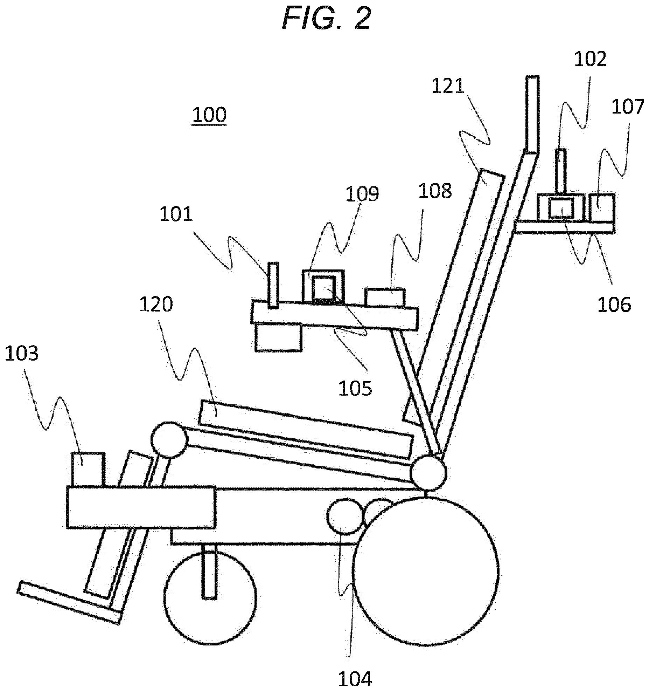

Next, an arrangement of each unit of electric vehicle 100 will be described. FIG. 2 is a side view illustrating an example of the arrangement of each unit of electric vehicle 100.

Electric vehicle 100 includes seat portion 120 on which the occupant seats, and backrest portion 121 supporting a back of the occupant seated on seat portion 120.

First instructor 101 is located at a position where the occupant seated on seat portion 120 is easy to operate and is disposed before backrest portion 121. That is, first instructor 101 is mainly operated by the occupant and is disposed in front of the back of the occupant in a state where the occupant is seated on seat portion 120. Second operation control switching unit 108 and third operation control switching unit 109 are disposed at positions close to first instructor 101. First operator input unit 105 is integrally constituted with third operation control switching unit 109.

Second instructor 102 is located at a position where the attendant of the occupant is easy to operate, and is disposed behind backrest portion 121. That is, second instructor 102 is mainly operated by the attendant and is disposed behind the back of the occupant in a state where the occupant is seated on seat portion 120. First operation control switching unit 107 is disposed at a position close to second instructor 102. Second operator input unit 106 is integrally constituted with second instructor 102.

Obstacle position measurer 103 is disposed at a foremost portion of the vehicle body of electric vehicle 100.

Driver 104 is disposed below seat portion 120.

Next, a process executed by running controller 113 of controller 110 will be described. Running controller 113 executes a determining process for determining the moving direction and the speed of electric vehicle 100.

The determining process determines which instruction among the instructors of first instructor 101, second instructor 102, and third instructor 112 is preferentially selected and executed according to the setting states of to first operation control switching unit 107, second operation control switching unit 108, and third operation control switching unit 109. That is, in the determining process, running controller 113 determines which instruction from the instructor is preferentially executed according to the setting state of each of operation control switching units in a case of receiving the instructions from first instructor 101, second instructor 102, and third instructor 112.

Specifically, in a case where first operation control switching unit 107 is in the A state, second operation control switching unit 108 is in the A state, and third operation control switching unit 109 is in the B state, running controller 113 preferentially selects the instruction from third instructor 112. In a case where there is no instruction from third instructor 112, running controller 113 preferentially selects the instruction from second instructor 102 to the instruction from first instructor 101. In a case where there is no instruction from second instructor 102, running controller 113 selects the instruction from first instructor 101.

In a case where first operation control switching unit 107 is in the A state, second operation control switching unit 108 is in the B state, and third operation control switching unit 109 is in the A state, running controller 113 preferentially selects the instruction from first instructor 101. In a case where there is no instruction from first instructor 101, running controller 113 preferentially selects the instruction from third instructor 112 to the instruction from second instructor 102. In a case where there is no instruction from third instructor 112, running controller 113 selects the instruction from second instructor 102.

In a case where first operation control switching unit 107 is in the A state, second operation control switching unit 108 is in the B state, and third operation control switching unit 109 is in the B state, running controller 113 preferentially selects the instruction from third instructor 112. In a case where there is no instruction from third instructor 112, running controller 113 preferentially selects the instruction from first instructor 101 to the instruction from second instructor 102. In a case where there is no instruction from first instructor 101, running controller 113 selects the instruction from second instructor 102.

In a case where first operation control switching unit 107 is in the B state, second operation control switching unit 108 is in the A state, and third operation control switching unit 109 is in the A state, running controller 113 preferentially selects the instruction from second instructor 102. In a case where there is no instruction from second instructor 102, running controller 113 preferentially selects the instruction from first instructor 101 to the instruction from third instructor 112. In a case where there is no instruction from first instructor 101, running controller 113 selects the instruction from third instructor 112.

In a case where first operation control switching unit 107 is in the B state, second operation control switching unit 108 is in the A state, and third operation control switching unit 109 is in the B state, running controller 113 preferentially selects the instruction from second instructor 102. In a case where there is no instruction from second instructor 102, running controller 113 preferentially selects the instruction from third instructor 112 to the instruction from first instructor 101. In a case where there is no instruction from third instructor 112, running controller 113 selects the instruction from first instructor 101.

In a case where first operation control switching unit 107 is in the B state, second operation control switching unit 108 is in the B state, and third operation control switching unit 109 is in the A state, running controller 113 preferentially selects the instruction from first instructor 101. In a case where there is no instruction from first instructor 101, running controller 113 preferentially selects the instruction from second instructor 102 to the instruction from third instructor 112. In a case where there is no instruction from second instructor 102, running controller 113 selects the instruction from third instructor 112.

In a case where first operation control switching unit 107 is in the A state, second operation control switching unit 108 is in the A state, and third operation control switching unit 109 is in the A state, running controller 113 does not select the instruction from any instructor. In a case where first operation control switching unit 107 is in the B state, second operation control switching unit 108 is in the B state, and third operation control switching unit 109 is in the B state, running controller 113 does not select the instruction from any instructor.

Here, control selection variable M1, control selection variable M2, control selection variable M3, operation value J1, operation value J2, and operation value J3 which are variables used in the determining process will be described.

Control selection variable M1 is a variable that is set according to whether the setting state of first operation control switching unit 107 is in the A state or the B state. That is, in running controller 113, information indicating whether the instruction from third instructor 112 is preferential or the instruction from second instructor 102 is preferential is set to control selection variable M1.

Control selection variable M2 is a variable that is set according to whether the setting state of second operation control switching unit 108 is in the A state or the B state. That is, in running controller 113, information indicating whether the instruction from second instructor 102 is preferential or the instruction from first instructor 101 is preferential is set to control selection variable M2.

Control selection variable M3 is a variable that is set according to whether the setting state of third operation control switching unit 109 is in the A state or the B state, and whether or not the operator of first instructor 101 is the specific person in a case where the setting state of third operation control switching unit 109 is in the A state. In a case where third operation control switching unit 109 is in the B state, in running controller 113, information indicating that the instruction from third instructor 112 is preferential is set to control selection variable M3. Also similar to a case where third operation control switching unit 109 is in the A state and the operator of first instructor 101 is not the specific person, in running controller 113, information indicating that the instruction from third instructor 112 is preferential is set to control selection variable M3. In a case where third operation control switching unit 109 is in the A state and the operator of first instructor 101 is the specific person, in running controller 113, information indicating that the instruction from first instructor 101 is preferential is set to control selection variable M3.

Operation value J1 is a variable that is set based on the instruction from first instructor 101. Operation value J1 is set based on an operation amount of first instructor 101.

Operation value J2 is a variable that is set based on the instruction from second instructor 102. Operation value J2 is set based on an operation amount of second instructor 102.

Operation value J3 is a variable that is set based on the instruction from third instructor 112. Operation value J3 is set based on a control value determined by third instructor 112.

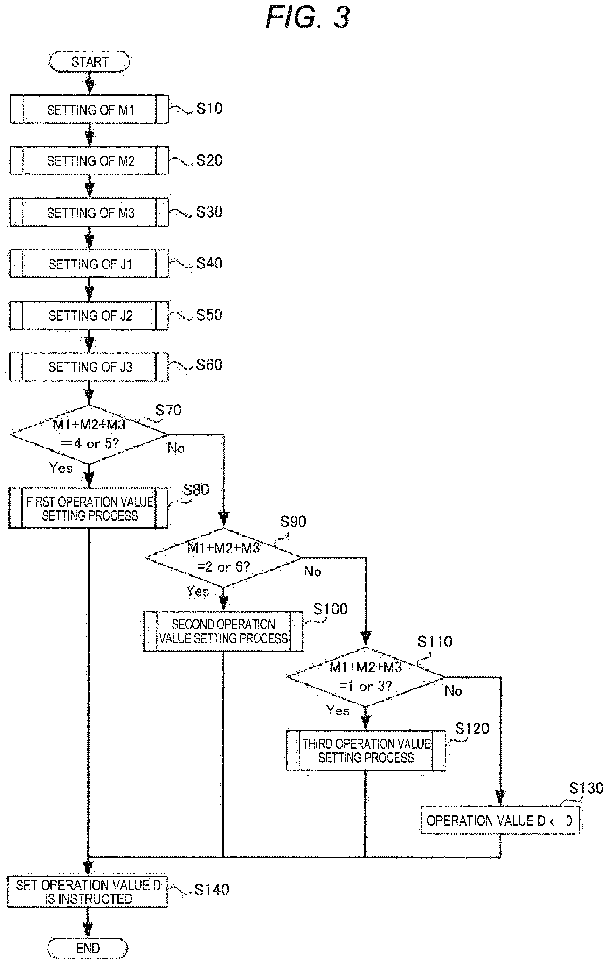

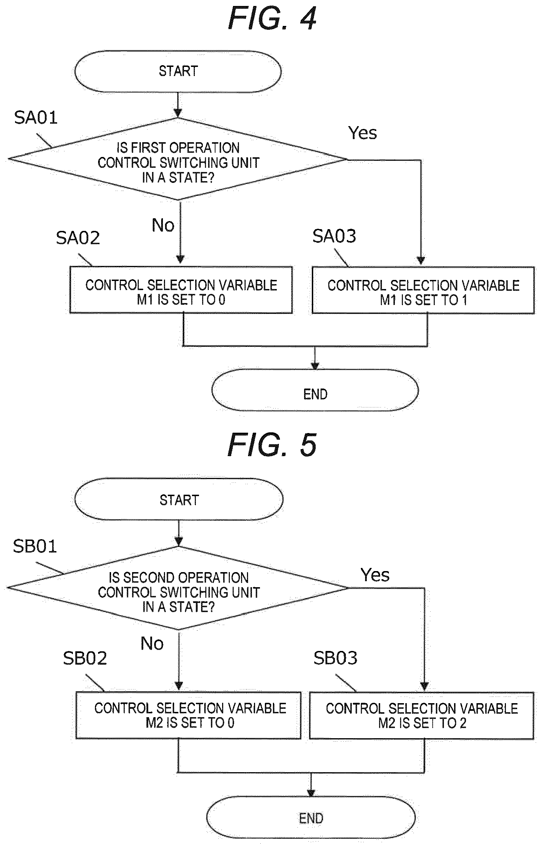

FIG. 3 is a flowchart illustrating an example of a flow of the determining process. In the determining process, first, running controller 113 performs the setting process of control selection variable M1 (step S10). FIG. 4 is a flowchart for explaining the setting process of control selection variable M1.

First, running controller 113 determines whether or not the setting state of first operation control switching unit 107 is in the A state (step SA01) . In a case where it is determined that first operation control switching unit 107 is not in the A state (case of No in step SA01), running controller 113 sets 0 to control selection variable M1 (step SA02), and ends the setting process of control selection variable M1.

On the other hand, in a case where it is determined that first operation control switching unit 107 is in the A state (case of Yes in step SA01), running controller 113 sets 1 to control selection variable M1 (step SA03), and ends the setting process of control selection variable M1.

Next, as illustrated in FIG. 3, running controller 113 performs the setting process of control selection variable M2 (step S20). FIG. 5 is a flowchart for explaining the setting process of control selection variable M2.

First, running controller 113 determines whether or not the setting state of second operation control switching unit 108 is in the A state (step SB01) . In a case where it is determined that second operation control switching unit 108 is not in the A state (case of No in step SB01), running controller 113 sets 0 to control selection variable M2 (step SB02), and ends the setting process of control selection variable M2.

On the other hand, in a case where it is determined that second operation control switching unit 108 is in the A state (case of Yes in step SB01), running controller 113 sets 2 to control selection variable M2 (step SB03), and ends the setting process of control selection variable M2.

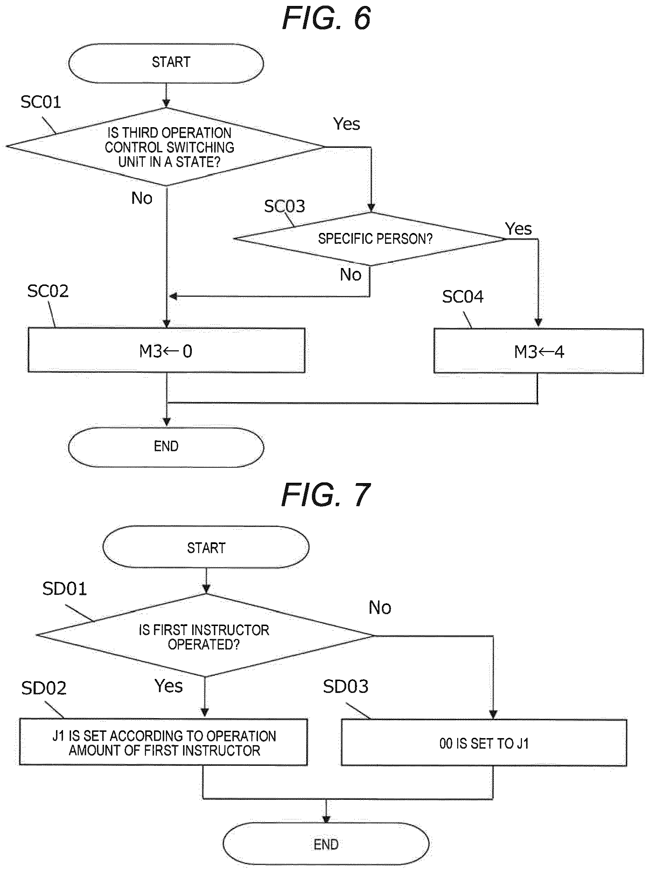

Next, as illustrated in FIG. 3, running controller 113 performs the setting process of control selection variable M3 (step S30). FIG. 6 is a flowchart for explaining the setting process of control selection variable M3.

First, running controller 113 determines whether or not the setting state of third operation control switching unit 109 is in the A state (step SC01) . In a case where it is determined that third operation control switching unit 109 is not in the A state (case of No in step SC01), running controller 113 sets 0 to control selection variable M3 (step SC02), and ends the setting process of control selection variable M3.

On the other hand, in a case where it is determined that third operation control switching unit 109 is in the A state (case of Yes in step SC01), running controller 113 refers to a determination result of first operator determination unit 114 and determines whether or not the operator is the specific person (step SC03).

In a case where it is determined that the operator is the specific person (case of Yes in step SC03), running controller 113 sets 4 to control selection variable M3 (step SC04), and ends the setting process of control selection variable M3.

In a case where it is determined that the operator is not the specific person (case of No in step SC03), running controller 113 sets 0 to control selection variable M3 (step SC02), and ends the setting process of control selection variable M3.

Next, as illustrated in FIG. 3, running controller 113 performs the setting process of operation value J1 (step S40). FIG. 7 is a flowchart illustrating the setting process of operation value J1.

In the setting process of operation value J1, running controller 113 determines whether or not first instructor 101 is operated (step SD01) .

In a case where it is determined that first instructor 101 is operated (case of Yes in step SD01), running controller 113 sets a value according to the operation amount of first instructor 101 to operation value J1 (step SD02), and ends the setting process of operation value J1.

In a case where it is determined that first instructor 101 is not operated (case of No in step SD01), running controller 113 sets 00 to operation value J1 (step SD03), and ends the setting process of operation value J1.

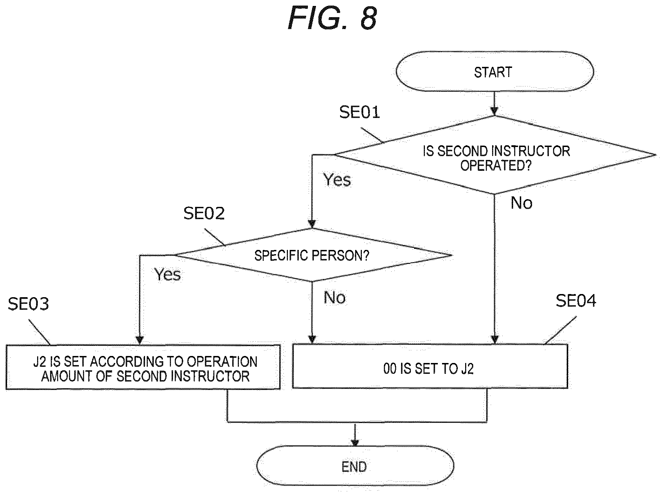

Next, as illustrated in FIG. 3, running controller 113 performs the setting process of operation value J2 (step S50). FIG. 8 is a flowchart illustrating the setting process of operation value J2.

In the setting process of operation value J2, running controller 113 determines whether or not second instructor 102 is operated (step SE01).

In a case where it is determined that second instructor 102 is operated (case of Yes in step SE01), running controller 113 refers to a determination result of second operator determination unit 115, and determines whether or not the operator of second instructor 102 is the specific person (step SE02).

In a case where it is determined that the operator is the specific person (case of Yes in step SE02), running controller 113 sets a value according to the operation amount of second instructor 102 to operation value J2 (step SE03), and ends the setting process of operation value J2.

On the other hand, in a case where it is determined that the operator is not the specific person (case of No in step SE02), running controller 113 sets 00 to operation value J2 (step SE04), and ends the setting process of operation value J2.

In a case where it is determined that second instructor 102 is not operated (case of No in step SE01), running controller 113 sets 00 to operation value J2 (step SE04), and ends the setting process of operation value J2.

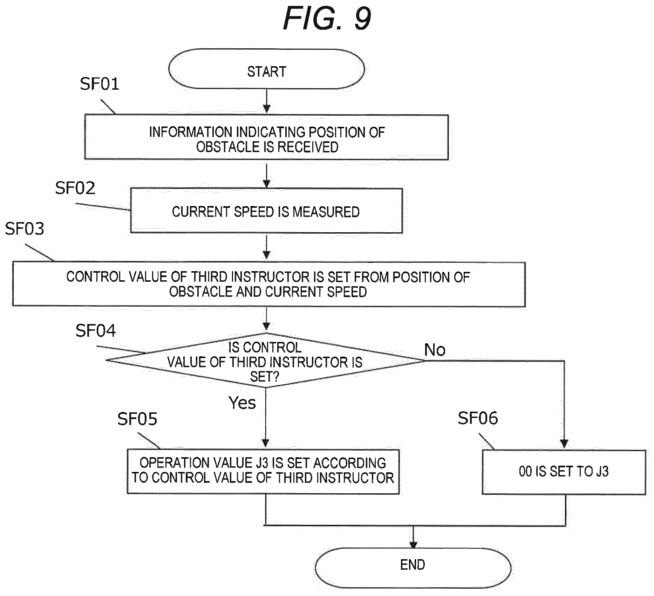

Next, as illustrated in FIG. 3, running controller 113 performs the setting process of operation value J3 (step S60). FIG. 9 is a flowchart illustrating the setting process of operation value J3.

In the setting process of operation value J3, first, third instructor 112 receives information indicating the position of the obstacle of the periphery from obstacle position measurer 103 (step SF01). Next, controller 110 measures the current speed of electric vehicle 100 in speed measurer 111 (step SF02).

Next, third instructor 112 sets the control value for controlling electric vehicle 100 so as to avoid the collision with the obstacle of the periphery based on the position of the obstacle of the periphery and the current speed of electric vehicle 100 measured by speed measurer 111 (step SF03). In a case where an operation to avoid the collision with the obstacle of the periphery is unnecessary, third instructor 112 does not set the control value.

Next, running controller 113 determines whether or not the control value is set in third instructor 112 (step SF04) . In a case where the control value is set (case of Yes in step SF04), running controller 113 sets a value according to the control value set in third instructor 112 to operation value J3 (step SF05), and ends the setting process of operation value J3. In a case where it is determined that the control value is not set (case of No in step SF04), running controller 113 sets 00 to operation value J3 (step SF06), and ends the setting process of operation value J3.

Next, as illustrated in FIG. 3, running controller 113 determines whether or not a value of a sum of control selection variable M1, control selection variable M2, and control selection variable M3 is 4 or 5 (step S70).

Here, a case where the value of the sum of control selection variable M1, control selection variable M2, and control selection variable M3 is 4 is a case where 0 is set to control selection variable M1, 0 is set to control selection variable M2, and 4 is set to control selection variable M3.

A case where the value of the sum of control selection variable M1, control selection variable M2, and control selection variable M3 is 5 is a case where 1 is set to control selection variable M1, 0 is set to control selection variable M2, and 4 is set to control selection variable M3.

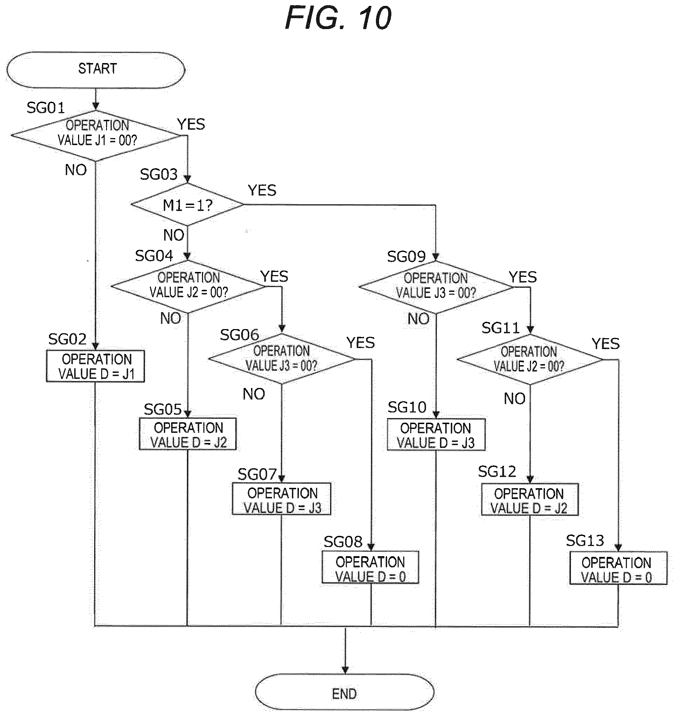

In a case where the value of the sum of control selection variable M1, control selection variable M2, and control selection variable M3 is 4 or 5, running controller 113 executes a first operation value setting process (step S80). Operation value D is a value that running controller 113 instructs to driver 104. FIG. 10 is a flowchart illustrating a flow of the first operation value setting process.

In the first operation value setting process, first, running controller 113 determines whether or not the value of operation value J1 is 00 (step SG01). In a case where the value of operation value J1 is not 00 (case of No in step SG01), running controller 113 sets the value of operation value J1 to operation value D (step SG02), and ends the first operation value setting process.

In a case where the value of operation value J1 is 00 (case of Yes in step SG01), running controller 113 determines whether or not the value of control selection variable M1 is 1 (step SG03).

In a case where the value of control selection variable M1 is not 1 (case of No in step SG03), running controller 113 determines whether or not the value of operation value J2 is 00 (step SG04). In a case where the value of operation value J2 is not 00 (case of No in step SG04), running controller 113 sets the value of operation value J2 to operation value D (step SG05), and ends the first operation value setting process.

In a case where the value of operation value J2 is 00 (case of Yes in step SG04), running controller 113 determines whether or not the value of operation value J3 is 00 (step SG06). In a case where the value of operation value J3 is not 00 (case of No in step SG06), running controller 113 sets the value of operation value J3 to operation value D (step SG07), and ends the first operation value setting process.

In a case where the value of operation value J3 is 00 (case of Yes in step SG06), running controller 113 sets 0 to operation value D (step SG08), and ends the first operation value setting process.

In a case where the value of control selection variable M1 is 1 (case of Yes in step SG03), running controller 113 determines whether or not the value of operation value J3 is 00 (step SG09) . In a case where the value of operation value J3 is not 00 (case of No in step SG09), running controller 113 sets the value of operation value J3 to operation value D (step SG10), and ends the first operation value setting process.

In a case where the value of operation value J3 is 00 (case of Yes in step SG09), running controller 113 determines whether or not the value of operation value J2 is 00 (step SG11). In a case where the value of operation value J2 is not 00 (case of No in step SG11), running controller 113 sets the value of operation value J2 to operation value D (step SG12), and ends the first operation value setting process.

In a case where the value of operation value J2 is 00 (case of Yes in step SG11), running controller 113 sets 0 to operation value D (step SG13), and ends the first operation value setting process.

That is, in the first operation value setting process, running controller 113 preferentially sets operation value J1 set based on the instruction from first instructor 101 to operation value D. In a case where first instructor 101 is not operated, running controller 113 determines between that operation value J2 is preferentially set to operation value D and that operation value J3 is preferentially set to operation value D according to the setting state of first operation control switching unit 107.

Here, return to the description of FIG. 3. In a case where the value of the sum of control selection variable M1, control selection variable M2, and control selection variable M3 is not 4 or 5 (case of No in step S70), running controller 113 determines whether or not the value of the sum of control selection variable M1, control selection variable M2, and control selection variable M3 is 2 or 6 (step S90).

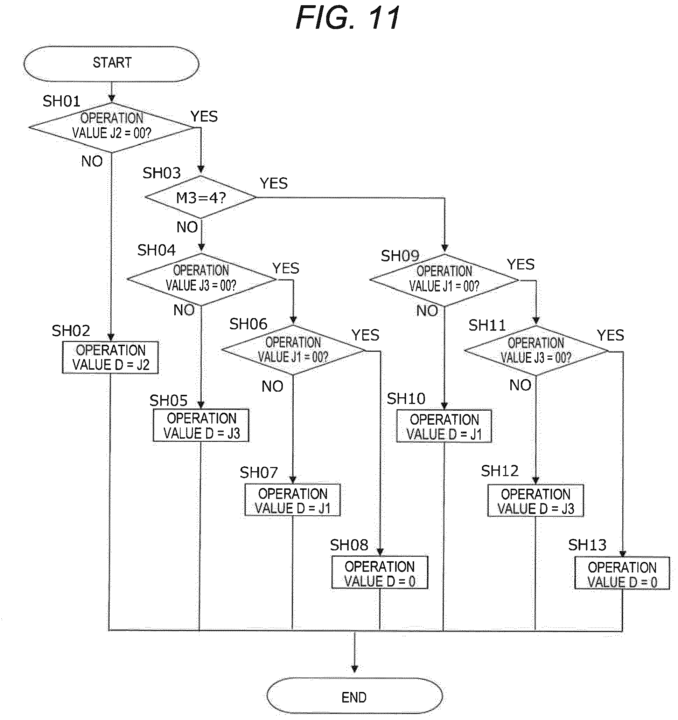

In a case where the value of the sum of control selection variable M1, control selection variable M2, and control selection variable M3 is 2 or 6 (case of Yes in step S90), running controller 113 executes a second operation value setting process (step S100). FIG. 11 is a flowchart illustrating a flow of the second operation value setting process.

In the second operation value setting process, first, running controller 113 determines whether the value of operation value J2 is 00 (step SH01). In a case where the value of operation value J2 is not 00 (case of No in step SH01), running controller 113 sets the value of operation value J2 to operation value D (step SH02), and ends the second operation value setting process.

In a case where the value of operation value J2 is 00 (case of Yes in step SH01), running controller 113 determines whether or not the value of control selection variable M3 is 4 (step SH03).

In a case where the value of control selection variable M3 is not 4 (case of No in step SH03), running controller 113 determines whether or not the value of operation value J3 is 00 (step SH04).

In a case where the value of operation value J3 is not 00 (case of No in step SH04), running controller 113 sets the operation value J3 to operation value D (step SH05), and ends the second operation value setting process.

In a case where the value of operation value J3 is 00 (case of Yes in step SH04), running controller 113 determines whether or not the value of operation value J1 is 00 (step SH06). In a case where the value of operation value J1 is not 00 (case of No in step SH06), running controller 113 sets the value of operation value J1 to operation value D (step SH07), and ends the second operation value setting process.

In a case where the value of operation value J1 is 00 (case of Yes in step SH06), running controller 113 sets 0 to operation value D (step SH08), and ends the second operation value setting process.

In a case where the value of control selection variable M3 is 4 (case of Yes in step SH03), running controller 113 determines whether or not the value of operation value J1 is 00 (step SH09) . In a case where the value of operation value J1 is not 00 (case of No in step SH09), running controller 113 sets the value of operation value J1 to operation value D (step SH10), and ends the second operation value setting process.

In a case where the value of operation value J1 is 00 (case of Yes in step SH09), running controller 113 determines whether or not the value of operation value J3 is 00 (step SH11). In a case where the value of operation value J3 is not 00 (case of No in step SH11), running controller 113 sets the value of operation value J3 to operation value D (step SH12), and ends the second operation value setting process.

In a case where the value of operation value J3 is 00 (case of Yes in step SH11), running controller 113 sets 0 to operation value D (step SH13), and ends the second operation value setting process.

That is, in the second operation value setting process, running controller 113 preferentially sets operation value J2 set based on the instruction from second instructor 102 to operation value D. In a case where second instructor 102 is not operated, running controller 113 determines between that operation value J1 is preferentially set to operation value D and that operation value J3 is preferentially set to operation value D according to the setting state of third operation control switching unit 109 and the detection result of first operator determination unit 114.

Here, return to the description of FIG. 3. In a case where it is determined that the value of the sum of control selection variable M1, control selection variable M2, and control selection variable M3 is not 2 or 6 (case of No in step S90), running controller 113 determines whether or not the value of the sum of control selection variable M1, control selection variable M2, and control selection variable M3 is 1 or 3 (step S110).

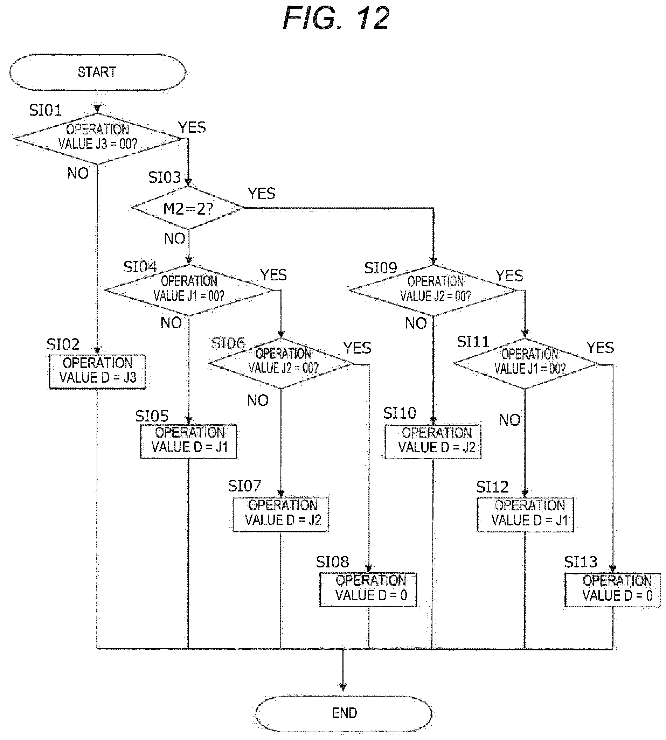

In a case where the value of the sum of control selection variable M1, control selection variable M2, and control selection variable M3 is 1 or 3 (case of Yes in step S110), running controller 113 executes a third operation value setting process (step S120). FIG. 12 is a flowchart illustrating a flow of the third operation value setting process.

In the third operation value setting process, first, running controller 113 determines whether or not the value of operation value J3 is 00 (step SI01). In a case where the value of operation value J3 is not 00 (case of No in step SI01), running controller 113 sets the value of operation value J3 to operation value D (step SI02), and ends the third operation value setting process.

In a case where the value of operation value J3 is 00 (case of Yes in step SI01), running controller 113 determines whether or not the value of control selection variable M2 is 2 (step SI03).

In a case where the value of control selection variable M2 is not 2 (case of No in step SI03), running controller 113 determines whether or not the value of operation value J1 is 00 (step SI04). In a case where the value of operation value J1 is not 00 (case of No in step SI04), running controller 113 sets the value of operation value J1 to operation value D (step SI05), and ends the third operation value setting process.

In a case where the value of operation value J1 is 00 (case of Yes in step SI04), running controller 113 determines whether or not the value of operation value J2 is 00 (step SI06) . In a case where the value of operation value J2 is not 00 (case of No in step SI06), running controller 113 sets operation value of operation value J2 to operation value D (step SI07), and ends the third operation value setting process.

In a case where the value of operation value J2 is 00 (case of Yes in step SI06), running controller 113 sets 0 to operation value D (step SI08), and ends the third operation value setting process.

In a case where the value of control selection variable M2 is 2 (case of Yes in step SI03), running controller 113 determines whether or not the value of operation value J2 is 00 (step SI09) . In a case where the value of operation value J2 is not 00 (case of No in step SI09), running controller 113 sets the value of operation value J2 to operation value D (step SI10), and ends the third operation value setting process.

In a case where the value of operation value J2 is 00 (case of Yes in step SI09), running controller 113 determines whether or not the value of operation value J1 is 00 (step SI11). In a case where the value of operation value J1 is not 00 (case of No in step SI11), running controller 113 sets the value of operation value J1 to operation value D (step SI12), and ends the third operation value setting process.

In a case where the value of operation value J1 is 00 (case of Yes in step SI11), running controller 113 sets 0 to operation value D (step SI13), and ends the third operation value setting process.

That is, in the third operation value setting process, running controller 113 preferentially sets operation value J3 set based on the instruction from third instructor 112 to operation value D. In a case where there is no instruction from third instructor 112, running controller 113 determines between that operation value J1 is preferentially set to operation value D and that operation value J2 is preferentially set to operation value D according to the setting state of second operation control switching unit 108.

Here, return to the description of FIG. 3. In a case where the value of the sum of control selection variable M1, control selection variable M2, and control selection variable M3 is not 2 or 6 (case of No in step S110), running controller 113 sets 0 to operation value D that running controller 113 instructs to driver 104 (step S130).

A case of No in step S110 is a case where the value of the sum of control selection variable M1, control selection variable M2, and control selection variable M3 is 0 or 7.

In a case where the value of the sum of control selection variable M1, control selection variable M2, and control selection variable M3 is 0, first operation control switching unit 107, second operation control switching unit 108, and third operation control switching unit 109 are set in the B state. In this case, running controller 113 cannot determine which instruction in the instructions from first instructor 101, second instructor 102, and third instructor 112 is preferentially executed.

In a case where the value of the sum of control selection variable M1, control selection variable M2, and control selection variable M3 is 7, first operation control switching unit 107, second operation control switching unit 108, and third operation control switching unit 109 are set in the A state. Also in this case, running controller 113 cannot determine which instruction in the instructions from first instructor 101, second instructor 102, and third instructor 112 is preferentially executed.

Therefore, in a case where the value of the sum of control selection variable M1, control selection variable M2, and control selection variable M3 is 0 or 7, running controller 113 sets 0 to operation value D that running controller 113 instructs to driver 104, and electric vehicle 100 is not run. However, in a case of receiving an instruction from any one instructor among first instructor 101, second instructor 102, and third instructor 112, running controller 113 may perform the running control of electric vehicle 100 based on the instruction.

Finally, running controller 113 instructs set operation value D to driver 104 (step S140).

In electric vehicle 100 according to the exemplary embodiment, running controller 113 determines operation value D and instructs operation value D to driver 104 along the flowchart illustrated in FIG. 3. Therefore, running controller 113 can determine which instruction among the instructions from first instructor 101, second instructor 102, and third instructor 112 is preferentially selected and executed according to the setting states of first operation control switching unit 107, second operation control switching unit 108, and third operation control switching unit 109.

According to the configuration described above, a person accustomed to the operation can perform the precise operation to run electric vehicle 100, for example, in a case of parking electric vehicle 100 in a narrow space, or the like. Even in a case where an operator unaccustomed to the operation of electric vehicle 100 makes a mistake, contact of electric vehicle 100 with a wall or an object can be avoided. Therefore, safe movement of electric vehicle 100 can be continued.

Second instructor 102 may be a hand-operated handle with power assist. In this case, a force sensor for measuring a force applied to the hand-operated handle is installed, and operation value J2 is set according to a measurement value of the force measured by the force sensor. The attendant can more intuitively steer electric vehicle 100 and a risk of collision with the obstacle is reduced with such a configuration.

Third instructor 112 may be an emergency stop button operated in a case where a person determines that there is a possibility of collision with the obstacle. In this case, in the setting process of operation value J3, when the emergency stop button is operated, in step SF04, it is determined that the control value of third instructor 112 exists, and running controller 113 sets a value for stopping electric vehicle 100 to operation value J3. Even in a case where the position of the obstacle cannot be measured by obstacle position measurer 103, it is possible to stop electric vehicle 100 at appropriate timing by the determination of the person with such a configuration.

A Time-of-Flight (TOF) sensor may be used as obstacle position measurer 103. In this case, the cost of electric vehicle 100 can be reduced as compared with a case of using a laser sensor.

A stereo camera may be used for obstacle position measurer 103, first operator input unit 105, or second operator input unit 106. In this case, in addition to depth information, since color information or the like can also be acquired, it is possible to acquire more detailed information about the occupant, the attendant, and the obstacle, thereby realizing highly accurate individual recognition and precise obstacle avoidance.

Speed measurer 111 may receive a signal from a sensor used for motor control such as a Hall sensor or a resolver in place of the encoder. Therefore, the need of use of the encoder is eliminated and the cost of electric vehicle 100 can be reduced.

First operator input unit 105 and second operator input unit 106 may be realized by one device. In this case, the number of devices is reduced thereby reducing the cost of electric vehicle 100.

Controller 110 can be, for example, a microcomputer or a processor configured to execute computer program instructions stored in a computer usable or computer-readable non-transitory memory that can suitably direct the processor to function in a particular manner, such that the instructions stored in the memory produce an article of manufacture, preferably including instruction means that suitably implement the process specified in the flowchart block or blocks.

In the exemplary embodiments described above, it is determined which instruction among the instructions from first instructor 101, second instructor 102, and third instructor 112 is preferentially selected and executed according to the setting states of first operation control switching unit 107, second operation control switching unit 108, and third operation control switching unit 109. However, it may be determined which instruction among the instructions from first instructor 101, second instructor 102, and third instructor 112 is preferentially selected by another method.

For example, running controller 113 may select any instruction among the instructions from first instructor 101, second instructor 102, and third instructor 112 according to a predetermined priority order. In this case, running controller 113 may preferentially select the instruction from third instructor 112 to the instruction from first instructor 101 at least in a case of receiving the instructions from first instructor 101 and third instructor 112.

The electric vehicle of the present disclosure is useful for an electric vehicle that requires indoor and outdoor movement such as nursing care and welfare fields.

## Claims

1. An electric vehicle (100) comprising:
a first instructor (101) that is operated by a first operator and performs an instruction of acceleration, deceleration, or stop;
a second instructor (102) that is operated by a second operator and performs an instruction of acceleration, deceleration, or stop;
a third instructor (112) that determines a control value which is a value for controlling a speed and a moving direction, and performs the instruction of deceleration or stop based on the control value;
a controller (110) that selects one of the instructions from the first instructor (101), the second instructor (102), and the third instructor (112); and
a driver (104) that drives according to an instruction from the controller (110),
wherein in a case of receiving the instructions from at least the first instructor (101) and the third instructor (112), the controller (110) preferentially selects the instruction from the third instructor (112) and not the instruction from the first instructor (101),
the electric vehicle (100)further comprising:
an operation control switching unit (107, 108, 109) configured to switch instruction the controller (110) preferentially selects among the instructions from the first instructor (101), the second instructor (102), and the third instructor (112),
**characterized in that** the operation control switching unit (107, 108, 109) includes a first operation control switching unit (107), and
wherein the first operation control switching unit (107) switches between that the instruction of the second instructor (102) is selected and that the instruction of the third instructor (112) is selected in a case where the controller (110) receives the instructions from the second instructor (102) and the third instructor (112) .

2. The electric vehicle (100) of Claim 1,
wherein the operation control switching unit (107, 108, 109) includes a second operation control switching unit (108), and
wherein the second operation control switching unit (108) switches between selecting the instruction of the first instructor (101) and selecting the instruction of the second instructor (102) in a case where the controller (110) receives the instructions from the first instructor (101) and the second instructor (102).

3. The electric vehicle (100) of Claim 1,
wherein the operation control switching unit (107, 108, 109) includes a third operation control switching unit (109),
wherein the third operation control switching unit (109) includes a first operator determination unit (114) that determines whether or not the first operator who operates the first instructor (101) is a specific person, and
wherein only in a case where the first operator is determined as the specific person by the first operator determination unit (114), the third operation control switching unit (109) switches so as to select the instruction from the first instructor (101) in a case where the controller (110) receives the instructions from the first instructor (101) and the third instructor (112).

4. The electric vehicle (100) of Claim 1,
wherein the first instructor (101) is disposed in front of a backrest portion (121) supporting a back of an occupant, and the second instructor (102) is disposed behind the backrest portion (121).

5. The electric vehicle (100) of Claim 1, further comprising:
a second operator determination unit (115) that determines whether the second operator who operates the second instructor (102) is a specific person, and
wherein only in a case where the second operator is determined as the specific person by the second operator determination unit (115), the controller (110) validates the instruction of the second instructor (102).

6. The electric vehicle (100) of Claim 1, further comprising:
an obstacle position measurer (103) that measures a position of an obstacle,
wherein the third instructor (112) determines the control value based on the position of the obstacle acquired from the obstacle position measurer (103).

7. The electric vehicle (100) of Claim 6, further comprising:
a speed calculator (111) that measures a current speed,
wherein the third instructor (112) determines the control value based on the position of the obstacle acquired from the obstacle position measurer (103) and the current speed acquired from the speed calculator (111).

## Patentansprüche

1. Elektrofahrzeug (100), das Folgendes umfasst:
einen ersten Instruktor (101), der von einem ersten Bediener bedient wird und eine Anweisung zum Beschleunigen, Verzögern oder Anhalten durchführt;
einen zweiten Instruktor (102), der von einem zweiten Bediener bedient wird und eine Anweisung zum Beschleunigen, Verzögern oder Anhalten durchführt;
einen dritten Instruktor (112), der einen Steuerwert bestimmt, der einen Wert zum Steuern einer Geschwindigkeit und einer Bewegungsrichtung ist, und die Anweisung zum Verzögern oder Anhalten auf Basis des Steuerwerts durchführt;
eine Steuerung (110), die eine der Anweisungen vom ersten Instruktor (101), vom zweiten Instruktor (102) und vom dritten Instruktor (112) auswählt; und
einen Fahrer (104), der gemäß einer Anweisung von der Steuerung (110) fährt,
wobei in einem Fall des Empfangens der Anweisungen mindestens vom ersten Instruktor (101) und vom dritten Instruktor (112) die Steuerung (110) vorzugsweise die Anweisung vom dritten Instruktor (112) und nicht die Anweisung vom ersten Instruktor (101) auswählt,
wobei das Elektrofahrzeug (100) ferner Folgendes umfasst:
eine Betriebssteuerungsumschalteinheit (107, 108, 109), die dazu ausgelegt ist, eine Anweisung, der Steuerung (110) vorzugsweise zwischen den Anweisungen vom ersten Instruktor (101), vom zweiten Instruktor (102) und vom dritten Instruktor (112) auswählt, umzuschalten,
**dadurch gekennzeichnet, dass** die Betriebssteuerungsumschalteinheit (107, 108, 109) eine erste Betriebssteuerungsumschalteinheit (107) beinhaltet, und
wobei die erste Betriebssteuerungsumschalteinheit (107) in einem Fall, in dem die Steuerung (110) die Anweisungen vom zweiten Instruktor (102) und vom dritten Instruktor (112) empfängt, dazwischen umschaltet, dass die Anweisung vom zweiten Instruktor (102) ausgewählt wird und dass die Anweisung vom dritten Instruktor (112) ausgewählt wird.

2. Elektrofahrzeug (100) nach Anspruch 1,
wobei die Betriebssteuerungsumschalteinheit (107, 108, 109) eine zweite Betriebssteuerungsumschalteinheit (108) beinhaltet, und
wobei die zweite Betriebssteuerungsumschalteinheit (108) in einem Fall, in dem die Steuerung (110) die Anweisungen vom ersten Instruktor (101) und vom zweiten Instruktor (102) empfängt, zwischen dem Auswählen der Anweisung des ersten Instruktors (101) und dem Auswählen der Anweisung des zweiten Instruktors (102) umschaltet.

3. Elektrofahrzeug (100) nach Anspruch 1,
wobei die Betriebssteuerungsumschalteinheit (107, 108, 109) eine dritte Betriebssteuerungsumschalteinheit (109) beinhaltet,
wobei die dritte Betriebssteuerungsumschalteinheit (109) eine erste Bedienerbestimmungseinheit (114) beinhaltet, die bestimmt, ob der erste Bediener, der den ersten Instruktor (101) bedient, eine spezifische Person ist oder nicht, und
wobei nur in einem Fall, in dem der erste Bediener von der ersten Bedienerbestimmungseinheit (114) als die spezifische Person bestimmt wird, die dritte Betriebssteuerungsumschalteinheit (109) in einem Fall, in dem die Steuerung (110) die Anweisungen vom ersten Instruktor (101) und vom dritten Instruktor (112) empfängt, derart umschaltet, dass die Anweisung vom ersten Instruktor (101) ausgewählt wird.

4. Elektrofahrzeug (100) nach Anspruch 1,
wobei der erste Instruktor (101) vor einem Rückenlehnenabschnitt (121), der einen Rücken eines Insassen stützt, angeordnet ist und der zweite Instruktor (102) hinter dem Rückenlehnenabschnitt (121) angeordnet ist.

5. Elektrofahrzeug (100) nach Anspruch 1, das ferner Folgendes umfasst:
eine zweite Bedienerbestimmungseinheit (115), die bestimmt, ob der zweite Bediener, der den zweiten Instruktor (102) bedient, eine spezifische Person ist, und
wobei nur in einem Fall, in dem der zweite Bediener von der zweiten Bedienerbestimmungseinheit (115) als die spezifische Person bestimmt wird, die Steuerung (110) die Anweisung des zweiten Instruktors (102) validiert.

6. Elektrofahrzeug (100) nach Anspruch 1, das ferner Folgendes umfasst:
einen Hindernispositionsmesser (103), der eine Position eines Hindernisses misst,
wobei der dritte Instruktor (112) den Steuerwert auf Basis der Position des Hindernisses, die vom Hindernispositionsmesser (103) erfasst wird, bestimmt.

7. Elektrofahrzeug (100) nach Anspruch 6, das ferner Folgendes umfasst:
einen Geschwindigkeitsberechner (111), der eine aktuelle Geschwindigkeit misst,
wobei der dritte Instruktor (112) den Steuerwert auf Basis der Position des Hindernisses, die vom Hindernispositionsmesser (103) erfasst wird, und der aktuellen Geschwindigkeit, die vom Geschwindigkeitsberechner (111) erfasst wird, bestimmt.

## Revendications

1. Véhicule électrique (100) qui comprend :
un premier instructeur (101) qui est exploité par un premier opérateur et exécute une instruction d'accélération, de décélération ou d'arrêt ;
un deuxième instructeur (102) qui est exploité par un second opérateur et exécute une instruction d'accélération, de décélération ou d'arrêt ;
un troisième instructeur (112) qui détermine une valeur de commande qui est une valeur destinée à commander une vitesse et une direction de déplacement, et exécute l'instruction de décélération ou d'arrêt sur la base de la valeur de commande ;
un dispositif de commande (110) qui sélectionne l'une des instructions depuis le premier instructeur (101), le deuxième instructeur (102) et le troisième instructeur (112) ; et
un pilote (104) qui pilote en fonction d'une instruction depuis le dispositif de commande (110),
dans lequel dans le cas d'une réception des instructions depuis au moins le premier instructeur (101) et le troisième instructeur (112), le dispositif de commande (110) sélectionne de préférence l'instruction depuis le troisième instructeur (112) et non l'instruction depuis le premier instructeur (101),
le véhicule électrique (100) qui comprend en outre :
une unité de commutation de commande d'opération (107, 108, 109) configurée pour commuter une instruction que le dispositif de commande (110) sélectionne de préférence parmi les instructions depuis le premier instructeur (101), le deuxième instructeur (102) et le troisième instructeur (112),
**caractérisé en ce que** l'unité de commutation de commande d'opération (107, 108, 109) inclut une première unité de commutation de commande d'opération (107), et
dans lequel la première unité de commutation de commande d'opération (107) commute entre le fait que l'instruction du deuxième instructeur (102) est sélectionnée et le fait que l'instruction du troisième instructeur (112) est sélectionnée dans le cas où le dispositif de commande (110) reçoit les instructions depuis le deuxième instructeur (102) et le troisième instructeur (112).

2. Véhicule électrique (100) selon la revendication 1, dans lequel l'unité de commutation de commande d'opération (107, 108, 109) inclut une deuxième unité de commutation de commande d'opération (108), et
dans lequel la deuxième unité de commutation de commande d'opération (108) commute entre la sélection de l'instruction du premier instructeur (101) et la sélection de l'instruction du deuxième instructeur (102) dans le cas où le dispositif de commande (110) reçoit les instructions depuis le premier instructeur (101) et le deuxième instructeur (102).

3. Véhicule électrique (100) selon la revendication 1, dans lequel l'unité de commutation de commande d'opération (107, 108, 109) inclut une troisième unité de commutation de commande d'opération (109),
dans lequel la troisième unité de commutation de commande d'opération (109) inclut une première unité de détermination d'opérateur (114) qui détermine si le premier opérateur qui exploite le premier instructeur (101) est ou non une personne spécifique, et
dans lequel seulement dans le cas où le premier opérateur est déterminé en tant que personne spécifique par la première unité de détermination d'opérateur (114), la troisième unité de commutation de commande d'opération (109) commute de manière à sélectionner l'instruction depuis le premier instructeur (101) dans le cas où le dispositif de commande (110) reçoit les instructions depuis le premier instructeur (101) et le troisième instructeur (112).

4. Véhicule électrique (100) selon la revendication 1, dans lequel le premier instructeur (101) est disposé en face d'une partie de dossier (121) qui soutient un dos d'un occupant, et le deuxième instructeur (102) est disposé derrière la partie de dossier (121).

5. Véhicule électrique (100) selon la revendication 1, qui comprend en outre :
une seconde unité de détermination d'opérateur (115) qui détermine si le second opérateur qui exploite le deuxième instructeur (102) est une personne spécifique, et
dans lequel seulement dans le cas où le second opérateur est déterminé en tant que personne spécifique par la seconde unité de détermination d'opérateur (115), le dispositif de commande (110) valide l'instruction du deuxième instructeur (102).

6. Véhicule électrique (100) selon la revendication 1, qui comprend en outre :
un mesureur de position d'obstacle (103) qui mesure une position d'un obstacle,
dans lequel le troisième instructeur (112) détermine la valeur de commande sur la base de la position de l'obstacle acquise depuis le mesureur de position d'obstacle (103).

7. Véhicule électrique (100) selon la revendication 6, qui comprend en outre :
un calculateur de vitesse (111) qui mesure une vitesse en cours,
dans lequel le troisième instructeur (112) détermine la valeur de commande sur la base de la position de l'obstacle acquise depuis le mesureur de position d'obstacle (103) et la vitesse en cours acquise depuis le calculateur de vitesse (111).
